# EUROPEAN PATENT SPECIFICATION

(11) **EP 3 243 627 B1**
(45) Date of publication and mention of the grant of the patent: **31.10.2018**
(21) Application number: 16382264.6
(22) Date of filing: 09.06.2016
(51) Int. Cl.: B29C 45/14, B29C 31/00, B29C 47/00, B25H 1/10, B60J 10/23, B29C 65/00, B25J 9/00, B29C 45/00, B29L 31/26, B29L 31/00

(54) **SYSTEM AND METHOD FOR LOADING PROFILES FOR THE ATTACHMENT OF THE ENDS THEREOF**
SYSTEM UND VERFAHREN ZUM EINSPANNEN VON PROFILEN ZUR BEFESTIGUNG IHRER ENDEN
SYSTÈME ET PROCÉDÉ DE CHARGEMENT DE PROFILS POUR LA FIXATION DE LEURS EXTRÉMITÉS

(43) Date of publication of application: 15.11.2017
(73) Proprietor: CQLT SaarGummi Technologies S.à.r.l., 5544 Remich (LU)
(72) Inventor: JIMÉNEZ GRADILLAS, Álvaro, E-28890 Loeches-Madrid (ES); GARCÍA GISMERO, Ángel Emilio, E-28890 Loeches-Madrid (ES)
(74) Representative: ABG Patentes, S.L.

(56) References cited:
- WO-A1-2008/147442
- WO-A1-2011/018131
- DE-A1- 3 038 122
- JP-A- 2008 006 589

## Description

### Object of the Invention

The present invention relates to a system and method for loading profiles for the attachment of the ends thereof. It particularly relates to an automated system and method for loading profiles, and more particularly for extruded profiles in the automotive industry.

### Background of the Invention

Extruded profiles based on EPDM (ethylene propylene diene monomer M-class rubber) thermosetting polymers derived from rubber are used in sealing systems, mainly in the automotive industry. In the process of manufacturing these profiles, there is a loading station in which the profiles are loaded in molds to attach the ends thereof, the profiles going from having an open linear shape to having a closed circular shape.

The system for loading the profiles in molds for the attachment of the ends thereof is currently done manually. An operator is responsible for placing the profiles on a frame, binding the profile in the frame to prevent them from projecting too much on the sides of the frame, introducing the ends thereof in the attachment molds and cleaning the inside of the ends of the profiles. Furthermore, the operator is responsible for using a compressed air blowing implement for cleaning the dirt generated inside the profiles during a prior step in which an extrusion process is performed.

This system and method for loading profiles in attachment molds involves the following problems:
- incorrect placement of the profiles in the attachment molds such that the ends of the profiles do not project enough from the attachment molds, which means that the ends of said profile would not be attached to one another in optimal conditions;
- profiles incorrectly hanging in the frame and projecting therefrom, which means that the profiles would cause interferences between the frames and machine shutdowns, and accordingly production line shutdowns;
- the ends of profiles are not clean for the following step which is the attachment of these ends of the profiles, which means inadequate attachment of the ends;
- step performed by an operator manually, which means high process variability.
Document WO 2011/018131A1 discloses a method for joining the joint of two coincident profiled ends of at least one sealing gasket on automobile doors and/or on the opening of the automobile doors, and a device for carrying out said method. Said document discloses the preamble of claim 1.

### Description of the Invention

The present invention proposes a solution to the aforementioned problems by means of a system for loading ends of profiles for the attachment thereof according to claim 1, and a method for placement of ends of profiles for the attachment thereof according to claim 12. The dependent claims define preferred embodiments of the invention.

A first inventive aspect provides a system for loading ends of profiles for the attachment thereof, the system comprising:
at least one mobile frame comprising
   a first holding area,
   an attachment area,
   at least one first holding element, located in the holding area of the frame, and configured for holding the profiles, and
   at least two attachment molds;
at least two guiding elements configured for adjusting and leveling the profiles such that the ends of the profiles are arranged at the same height,
at least one robot arm, and
a control system configures for controlling the at least one mobile frame (1) and the at least two guiding elements, the system characterized in that
the at least two attachment molds are located in the attachment area of the frame,
the robot arm comprises a gripping implement configured for gripping, transporting and introducing the profiles in the attachment molds, and
the control system is also configured for controlling the at least one robot arm and the at least two attachment molds.

This system for loading ends of profiles for the attachment thereof advantageously allows the correct and optimal placement of the profiles in the molds for the attachment of the ends thereof.

In a particular embodiment, the at least two guiding elements are mobile between a first operating position and a second non-operating position, and comprise,
a first and second mobile guides configured for housing and trapping the profiles, and
a mobile leveling device configured for leveling the ends of the profiles at the same height.

Advantageously, these two guiding elements allow, when the profiles are loaded on the holding element of the frame, the profiles to be oriented and guided during this step for loading profiles, and they furthermore allow the ends of profiles to be leveled at the same height so that they are subsequently transferred to the attachment molds.

In a particular embodiment, the mobile guides comprise at least two side walls arranged vertically and parallel to one another, configured for moving horizontally and trapping the profiles. This horizontal movement of the side walls of the mobile guides allows the correct and constant orientation of the profiles in the guiding elements.

In another particular embodiment, the mobile leveling device is configured for performing a vertical movement and comprises a base on which the ends of the profiles would be supported.

In a more particular embodiment, the first and second mobile guides comprise at least two diverging plates diverging into a V shape for making it easier to receive the profiles in the guiding elements.

Diverging plate diverging into a V shape is understood as a rectangular part diverging from the ends of the walls of each mobile guide.

Advantageously, these plates make it easier to receive the profiles in a quick and simple manner, assuring that the profiles are oriented correctly and constantly on the guiding elements.

In a particular embodiment, the guiding elements comprise a retraction movement, comprised between a first operating position and a second non-operating position. Therefore, when the profiles are loaded on at least one holding element, the guiding elements are deployed in a first operating position, and when the profiles are already housed in the attachment molds, the guiding elements are pulled back in a second non-operating position. The retraction movement of the guiding elements is in connection with a conveyor belt on which the mobile frame moves, i.e., when the guiding elements are deployed, in the first operating position, they are located outside the conveyor belt, and when the elements are pulled back, in the second non-operating position, they are located below the conveyor belt.

This retraction movement of the guiding elements advantageously makes it easier to control movement of the robot arm once the ends of profiles are housed in the attachment molds.

In a particular embodiment, the gripping implement comprises at least one first mobile clamp located inside the gripping implement, and configured for gripping the ends of the profiles. In a more particular embodiment, the gripping implement comprises a first mobile clamp and a second mobile clamp. In another particular embodiment, the first and second mobile clamps comprise the same dimensions and orientation as the openings of the attachment molds.

Advantageously, the mobile clamp located inside the gripping implement allows securely gripping the profiles, furthermore the possibility of the gripping implement comprising first and second mobile clamps allows gripping at least two profiles at the same time.

In a particular embodiment, the robot arm is configured for performing a rotational movement of 180° when it moves between the at least two guiding elements.

In a particular embodiment, the at least two attachment molds comprise an upper mold piece, a lower mold piece, both mold pieces forming at least one opening configured for housing the ends of profiles. In a more particular embodiment, the upper and lower mold pieces form two openings configured for housing the ends of profiles.

Advantageously, the configuration of the attachment molds allows securely housing the ends of the profiles for the subsequent attachment thereof. The possibility of the attachment molds comprising at least two openings allows the option of housing at least two ends of profiles in each attachment mold.

In a particular embodiment, the openings of the attachment molds comprise a matching geometry with respect to the geometry of the profiles.

Matching geometry is understood as when the geometric configuration of two structural elements is similar, i.e., the geometry of the profiles conforms to the geometry of the openings, such that the profiles fit without restriction in the openings formed by the attachment molds.

The possibility of the geometry of the openings of the attachment molds matching the geometry of the profiles advantageously allows the ends of the profiles to be housed in the attachment molds in a simple manner.

In a particular embodiment, the system comprises at least one second holding element located in the holding area of the frame.

In a particular embodiment, the system comprises a placement element configured for tightening and binding the profile in the at least second holding element. In a more particular embodiment, the control system is also configured for controlling the placement element.

In these embodiments, the placement element advantageously allows tightening the profiles by binding them with the second holding element, thereby preventing the profiles projecting from the frame.

In a particular embodiment, the system comprises at least two stop elements configured for assuring the correct position of the profiles when the ends thereof are introduced in the attachment molds, i.e., limiting the reach of the ends of the profiles in their approach movement. The stop element comprises a vertical movement from a non-operating area lower than frame, which does not interfere with the movement of the frame, to an operating position with the stop element sandwiched between the attachment molds. It further comprises a horizontal movement from said position sandwiched between the attachment molds until coming into contact with the attachment molds.

Approach movement is understood as the movement of the ends of the profiles when they are introduced in the attachment molds such that each end is positioned near the other end of the profile. Therefore, the movement for introducing the ends of the profiles in the attachment molds comprises said ends approaching one another.

In a particular embodiment, the stop element comprises cleaning means for cleaning the inside of the ends of the profiles; said cleaning means are configured for being introduced inside the ends of the profiles when these ends are housed inside the attachment molds. In a more particular embodiment, the cleaning means are compressed air blowing and suction means.

Advantageously, the cleaning means allow eliminating the dirt generated inside the profiles during a prior extrusion process.

In a second inventive aspect, the invention provides a method for loading ends of profiles for the attachment thereof, the method comprising the following steps:
a) providing a system for loading according to any of the embodiments of the first inventive aspect,
b) loading the profiles on the holding element and the guiding element of the frame,
c) adjusting the profiles by means of the guiding element,
d) leveling the height of the profiles by means of the guiding element,
e) gripping the ends of the profiles through the gripping implement of the robot arm,
f) transporting the ends of the profiles from the guiding element to the attachment mold of the frame by means of the robot arm,
g) introducing the ends of the profiles in the attachment mold, and
h) tightening the profiles by means of the placement element,
wherein the control system is configured for controlling the movement of the at least one mobile frame, at least two guiding elements, at least one robot arm, at least two attachment molds and of the at least one placement element.

In a particular embodiment, step (d) comprises leveling the height of the ends of profiles by means of a vertical movement of the mobile leveling device of the guiding element.

In a particular embodiment, in step (e) the first and second mobile clamps of the gripping implement perform a sequential gripping movement.

In a particular embodiment, step (h) comprises moving the placement element for tightening the profile to reach and be retained in the second holding element.

In a particular embodiment, the method comprises a step prior to step (h) in which the reach of the ends of the profiles is limited, and the inside of the ends of the profiles is simultaneously cleaned by means of the stop element and the cleaning means.

In a final unclaimed aspect, the invention provides a computer program or software comprising computer program code means which, when run by a control system (microcontroller, computer, programmable logic controller, etc...) causes the control system to carry out all the steps of a method according to any of the preceding embodiments.

More specifically, the control system comprises software configured for controlling each movement of the mobile frame, the robot arm, the guiding elements, the attachment molds and the placement element, coordinated with one another, and coordinated with the commands existing in the loading station.

### Description of the Drawings

These and other features and advantages of the invention will become more evident from the following detailed description of a preferred embodiment, given only by way of non-limiting illustrative example, in reference to the attached drawings.
Figure 1 shows a perspective view of the system according to the present invention.
Figure 2 shows a front view of the mobile frame and the guiding elements according to the present invention.
Figure 3 shows a perspective view of one of the guiding elements according to the present invention.
Figure 4 shows a detailed perspective view of the gripping implement according to the present invention.
Figure 5 shows a perspective view of the attachment area according to the present invention.
Figure 6 shows a perspective view of step (e) of the method according to the present invention.
Figure 7 shows a perspective view of step (g) of the method according to the present invention.
Figure 8 shows a front view of the frame and the placement element according to the present invention.
Figure 9 shows a detailed perspective view of the placement element according to the present invention.
Figures 10A and 10B show a detailed perspective view of the stop element and the attachment molds according to the present invention.

### Detailed Description of the Invention

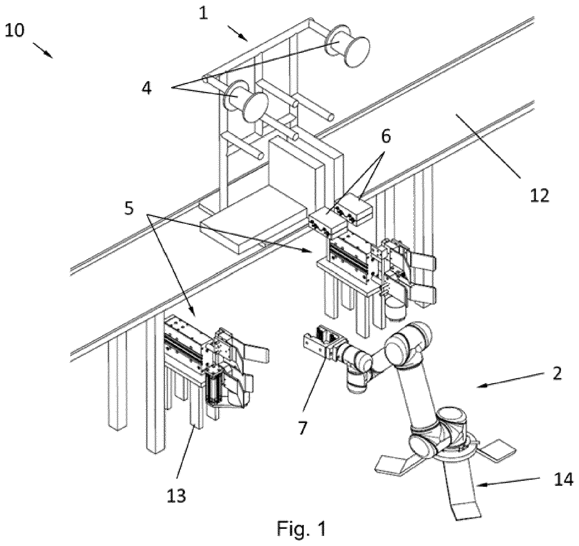

Figure 1 shows the system (10) for loading ends of profiles (11) for the attachment thereof, characterized in that it comprises a mobile frame (1), two guiding elements (5) and a robot arm (2). Furthermore, the system (10) comprises a control system (3) (not shown in the drawing) configured for controlling the mobile frame (1), the robot arm (2) and the guiding elements (5).

The mobile frame (1) is located on a conveyor belt (12) on which it moves between the different manufacturing stations. In the present invention, the described system is located in a loading station for loading the ends of profiles (11), said loading station is located after the profile extrusion station and before the attachment station for attaching the ends of profiles (11).

The guiding elements (5) are located below the conveyor belt (12) on both sides of the mobile frame (1) and parallel to one another. Furthermore, the guiding elements (5) are anchored to the ground by means of a support structure (13) on which they are supported.

The robot arm (2) is located anchored to the ground by means of a support structure (14), and comprises a gripping implement (7) configured for gripping the profiles (11) of the guiding elements (5).

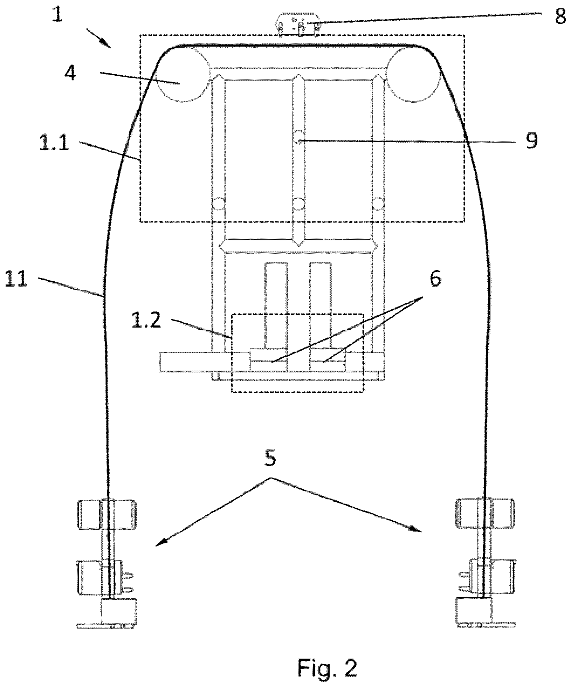

Figure 2 shows how the mobile frame (1) comprises a holding area (1.1) and two holding elements (4) located in said holding area (1.1). It furthermore shows a profile (11) hanging from the holding elements (4) and housed in the guiding elements (5).

The mobile frame (1) additionally comprises an attachment area (1.2) in which are located two attachment molds (6).

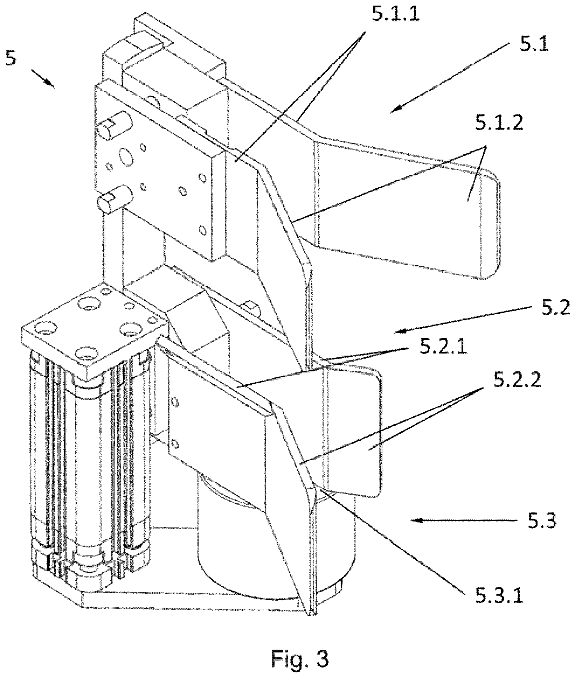

Figure 3 shows in detail the guiding elements (5) comprising first and second mobile guides (5.1, 5.2) configured for housing and trapping the profiles (11) and a leveling device (5.3) configured for leveling the ends of the profiles (11) at one and the same height. The leveling device (5.3) and the second and first mobile guide (5.2, 5.1) are consecutively arranged vertically from the support structure (13) towards the conveyor belt (12) (as shown in Figure 1).

The first and second mobile guides (5.1, 5.2) each respectively comprises two walls (5.1.1, 5.2.1) parallel to one another and configured for moving horizontally and trapping the profiles (11). Furthermore, two plates (5.1.2, 5.2.2) which make it easier to receive the profiles (11) in the guiding elements (5) diverge respectively from the ends of the walls (5.1.1, 5.2.1).

The leveling device (5.3) comprises a vertical movement for leveling the ends of the profiles (11) at one and the same height, such that the ends of the profiles (11) are supported on a leveling base (5.3.1) arranged in the leveling device (5.3) .

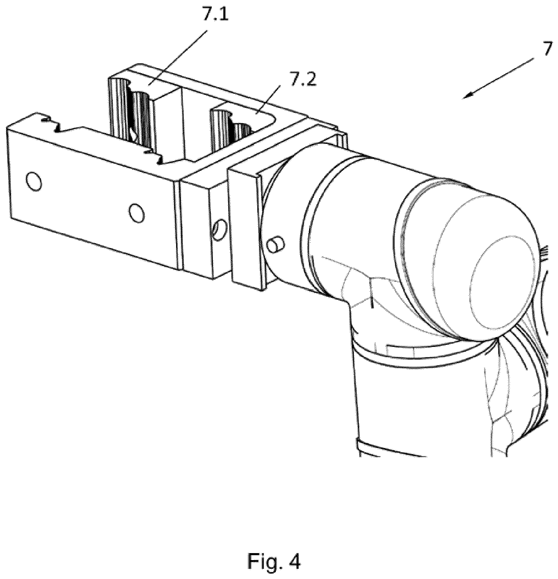

Figure 4 shows the gripping implement (7) of the robot arm (2). This gripping implement (7) comprises a first mobile clamp (7.1) located inside the implement (7) and near the free ends of the implement (7), and further comprises a second mobile clamp (7.2) located inside the implement (7) and near the inside of the implement (7).

In a particular example, the mobile clamps (7.1, 7.2) are configured for gripping and releasing the profiles independently and sequentially. Therefore, the second mobile clamp (7.2), which is the one nearest the inside of the gripping implement, is the first to grip the profile (11) which is nearest the outside of the guiding element (5), and then the first mobile clamp (7.1), which is the one nearest the free ends of the gripping implement (7), grips the profile (11) which is nearest the inside of the guiding element.

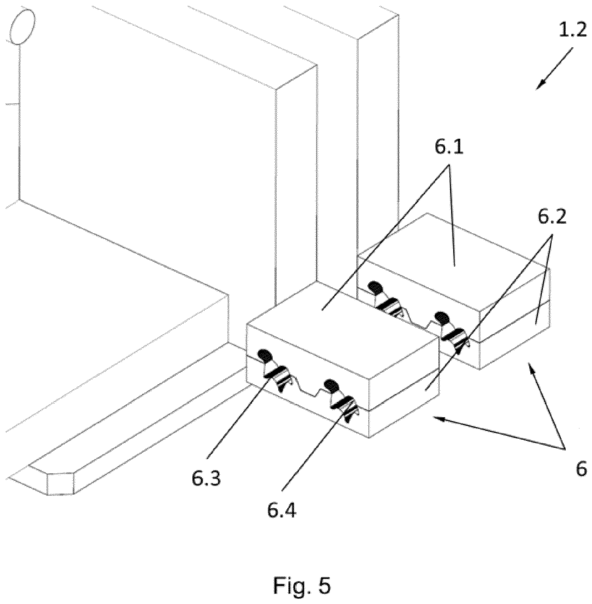

Figure 5 shows the attachment area (1.2) of the mobile frame (1) comprising two attachment molds (6). Each attachment mold (6) comprises first and second mold pieces (6.1, 6.2) forming two openings (6.3, 6.4) configured for housing the ends of the profiles (11).

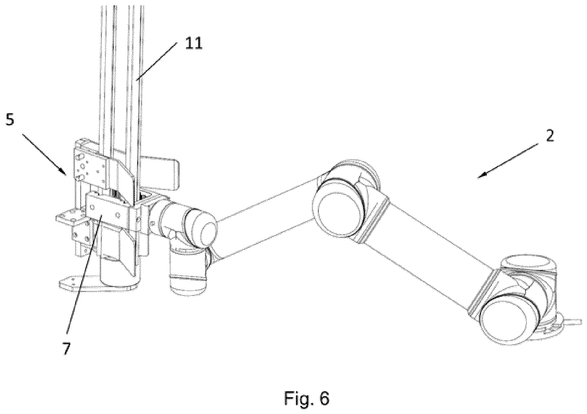

Figure 6 shows step (e) of the method in which it can be seen how the robot arm (2) is deployed near the guiding element (5), such that the gripping implement (7) grips the profiles (11) through its mobile clamps (7.1, 7.2). Once the implement (7) grips the profiles (11) it then transports them to the attachment area (1.2) through the movement made by the robot arm (2) on the gripping implement (7) (not shown in the drawings).

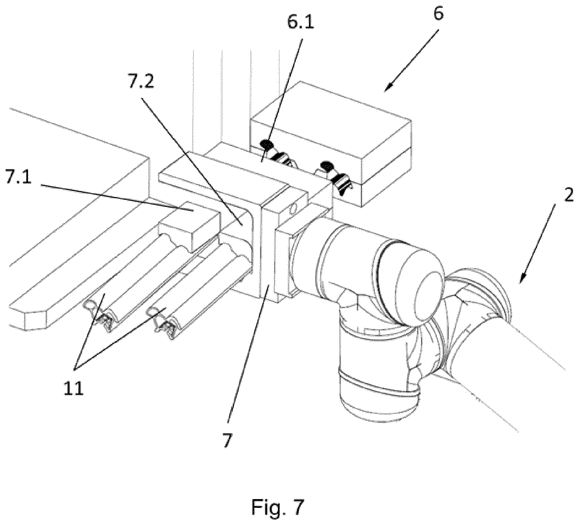

Figure 7 shows step (g) of the method in which it can be seen how the gripping implement (7) has introduced the ends of the profiles (11) in the openings (6.3, 6.4) of the attachment mold (6) through the movement made by the robot arm (2) on the gripping implement (7).

In Figures 6 and 7 it can be seen how the robot arm (2) acts on the profiles (11), such that it performs a rotational movement in its actuations between the two guiding elements (5). This rotational movement is comprised between the time the gripping implement (7) has introduced the ends of the profiles (11) in an attachment mold (6) until the time it grips the ends of profiles (11) of the other guiding element (5). In a particular example, said rotational movement made by the robot arm (2) is 180°.

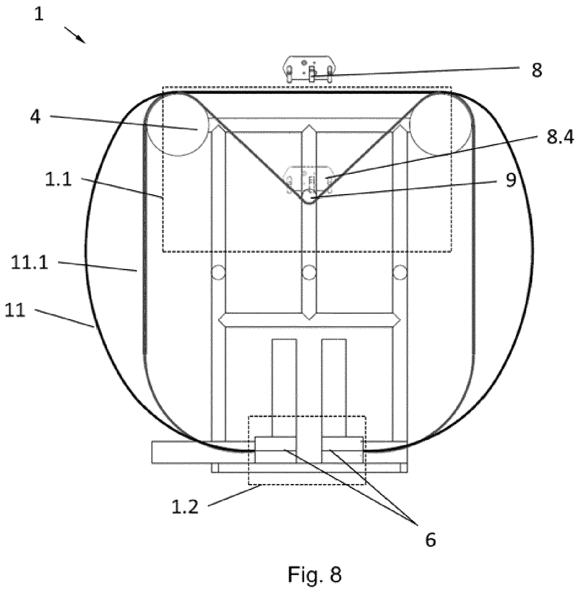

Figure 8 shows the mobile frame (1) with the profiles (11) hanging on the holding elements (4) and the ends of said profiles (11) housed in the attachment molds (6). It shows a second holding element (9) on which the profiles (11) are bound as a result of a placement element (8) arranged on the mobile frame (1).

Furthermore, it shows how the profiles (11.1) are arranged after step (h) of the method in which the profiles (11) are tightened, such that the profiles (11.1) are tightened and bound with the second holding element (9) without the ends thereof projecting from the attachment molds (6). The placement element (8) is responsible for binding the profiles (11) by means of the downward vertical movement and inside-to-outside horizontal movement, and vice versa, of the mobile frame (1) of said placement element (8) to the position (8.4) in which the profiles (11.1) are bound.

In a particular example, the placement element (8) is located in a position away from the guiding elements (5) and the robot arm (2), such that when the ends of the profiles (11) are introduced in the attachment molds, the mobile frame (1) moves by means of the conveyor belt (12) to where the placement element (8) is located.

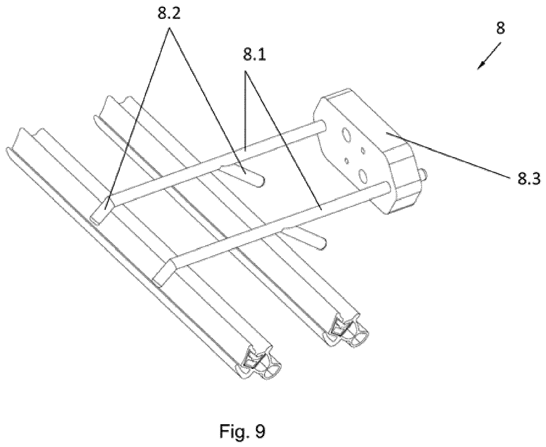

Figure 9 shows the placement element (8) responsible for binding the profiles (11) in the second holding element (9). The placement element (8) comprises two placement rods (8.1) parallel to one another, each comprising two projections (8.2) arranged downwardly tilted such that they make it easier to grab the profiles (11) for binding them with the second holding element (9). Furthermore, the placement element (8) comprises a base element (8.3) from which the two placement rods (8.1) exit horizontally and perpendicular to one another.

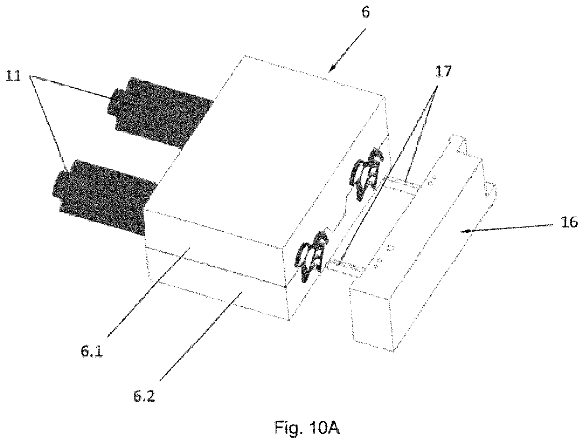

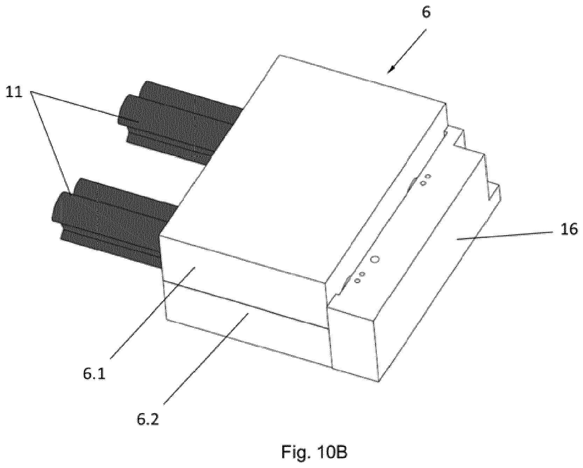

Figure 10A shows the stop element (16) comprising cleaning means (17) and it is located in the position sandwiched between the attachment molds (6) and facing the ends of the profiles (11) of one of the attachment molds (6). Furthermore, the stop element (16) comprises a horizontal movement from said sandwiched position until coming into contact with the attachment mold (6), such that the cleaning means (17) are introduced in the ends of the profiles (11) (as shown in Figure 10B). From the sandwiched position of the stop element (16) until this stop element (16) comes into contact with the attachment mold (6), the cleaning means comprise blowing and suctioning the inside of the ends of the profiles (11) .

In a particular example, a method for loading ends of profiles (11) for the attachment thereof is described, said method comprising the following steps:
a) providing a system for loading,
b) loading the profiles (11) on the holding element (4) and the guiding element (5) of the frame (1),
c) adjusting the profiles (11) by means of the guiding element (5),
d) leveling the height of the profiles (11) by means of the guiding element (5),
e) gripping the ends of the profiles (11) through the gripping implement (7) of the robot arm (2),
f) transporting the ends of the profiles (11) from the guiding element (5) to the attachment mold (6) of the frame (1) by means of the robot arm (2),
g) introducing the ends of the profiles (11) in the attachment mold (6), and
h) tightening the profiles (11) by means of the placement element (8), and simultaneously, limiting the reach of the ends of the profiles (11) by means of the stop elements (16), and cleaning the inside of the ends of the profiles (11) by means of the cleaning means (17),
wherein the control system (3) is configured for controlling the movement of the at least one mobile frame (1), at least two guiding elements (5), at least one robot arm (2), at least two attachment molds (6) and of the at least one placement element (8).

In a particular example, steps a), b), c), d), e), f) and g) are performed in a first station, and step h) is performed in a second station, such that the mobile frame (1) moves on the conveyor belt (12) from the first station to the second station.

## Claims

1. A system (10) for loading ends of profiles (11) for the attachment thereof, the system (10) comprising:
- at least one mobile frame (1) comprising
a first holding area (1.1),
an attachment area (1.2),
at least one first holding element (4), located in the holding area (1.1) of the frame (1), and configured for holding the profiles (11),and at least two attachment molds (6);
- at least two guiding elements (5) configured for adjusting and leveling the profiles (11) such that the ends of the profiles (11) are arranged at the same height,
- at least one robot arm (2), and
- a control system (3) configured for controlling the at least one mobile frame (1) and the at least two guiding elements (5),
the system (10) **characterized in that**
the at least two attachment molds (6) are located in the attachment area (1.2) of the frame (1),
the robot arm (2) comprises a gripping implement (7) configured for gripping, transporting and introducing the profiles (11) in the attachment molds (6), and
the control system (3) is also configured for controlling the at least one robot arm (2) and the at least two attachment molds (6).

2. The system (10) for loading ends of profiles (11) for the attachment thereof according to claim 1, **characterized in that** the at least two guiding elements (5) are mobile between a first operating position and a second non-operating position and comprise,
a first and second mobile guides (5.1, 5.2) configured for housing and trapping the profiles (11), and
a mobile leveling device (5.3) configured for leveling the ends of the profiles (11) at the same height.

3. The system (10) for loading ends of profiles (11) for the attachment thereof according to claim 2, **characterized in that** the first and second mobile guides (5.1, 5.2) comprise at least two diverging plates (5.1.2, 5.2.2) diverging into a V shape for making it easier to receive the profiles in the guiding elements (5).

4. The system (10) for loading ends of profiles (11) for the attachment thereof according to claim 1, **characterized in that** the gripping implement (7) comprises at least one first mobile clamp (7.1) located inside the gripping implement (7), and configured for gripping and releasing the ends of the profiles (11).

5. The system (10) for loading ends of profiles (11) for the attachment thereof according to claim 4, **characterized in that** the gripping implement (7) comprises a first mobile clamp (7.1) and a second mobile clamp (7.2).

6. The system (10) for loading ends of profiles (11) for the attachment thereof according to claim 1, **characterized in that** the at least two attachment molds (6) comprise an upper mold piece (6.1), a lower mold piece (6.2), both mold pieces (6.1, 6.2) forming at least one opening (6.3) configured for housing the ends of profiles (11).

7. The system (10) for loading ends of profiles (11) for the attachment thereof according to claim 6, **characterized in that** the mold pieces (6.1, 6.2) form two openings (6.3, 6.4) configured for housing the ends of profiles (11).

8. The system (10) for loading ends of profiles (11) for the attachment thereof according to claim 7, **characterized in that** the openings (6.3, 6.4) of the attachment molds (6) comprise a matching geometry with respect to the geometry of the profiles (11).

9. The system (10) for loading ends of profiles (11) for the attachment thereof according to any of the preceding claims, **characterized in that** it comprises at least one second holding element (9) located in the holding area (1.1) of the frame (1).

10. The system (10) for loading ends of profiles (11) for the attachment thereof according to claim 9, **characterized in that** it comprises a placement element (8) configured for tightening and binding the profile (11) in the at least second holding element (9).

11. The system (10) for loading ends of profiles (11) for the attachment thereof according to any of the preceding claims, **characterized in that** it comprises at least two stop elements (16) configured for limiting the reach of the ends of the profiles (11) when these ends are introduced in the attachment molds (6), said at least two stop elements (16) comprising cleaning means (17) configured for cleaning the inside of the ends of the profiles (11).

12. A method for loading ends of profiles (11) for the attachment thereof, the method comprising the following steps:
a) providing a system for loading according to any of claims 1 to 11,
b) loading the profiles (11) on the holding element (4) and the guiding element (5) of the frame (1),
c) adjusting the profiles (11) by means of the guiding element (5),
d) leveling the height of the profiles (11) by means of the guiding element (5),
e) gripping the ends of the profiles (11) through the gripping implement (7) of the robot arm (2),
f) transporting the ends of the profiles (11) from the guiding element (5) to the attachment mold (6) of the frame (1) by means of the robot arm (2),
g) introducing the ends of the profiles (11) in the attachment mold (6), and
h) tightening the profiles (11) by means of the placement element (8),
wherein the control system (3) is configured for controlling the movement of the at least one mobile frame (1), at least two guiding elements (5), at least one robot arm (2), at least two attachment molds (6) and of the at least one placement element (8).

13. The method for loading ends of profiles (11) for the attachment thereof according to claim 12, **characterized in that** step (d) comprises leveling the height of the ends of profiles (11) by means of a vertical movement of the mobile leveling device (5.3) of the guiding element (5).

14. The method for loading ends of profiles (11) for the attachment thereof according to claim 12, **characterized in that** in step (e) the first and second mobile clamps (7.1, 7.2) of the gripping implement (7) perform a sequential gripping movement.

15. The method for loading ends of profiles (11) for the attachment thereof according to claim 12, **characterized in that** step (h) comprises moving the placement element (8) for tightening the profile (11) to reach and be retained in the second holding element (9).

## Patentansprüche

1. System (10) zum Einspannen der Enden von Profilen (11) zur Befestigung dieser, das System (10) aufweisend:
- zumindest einen bewegbaren Rahmen (1), aufweisend
einen ersten Haltebereich (1.1),
einen Befestigungsbereich (1.2),
zumindest ein erstes Halteelement (4), das sich in dem Haltebereich (1.1) des Rahmens (1) befindet und zum Halten der Profile (11) eingerichtet ist, und
zumindest zwei Befestigungsformen (6);
- zumindest zwei Führungselemente (5), die zum Einstellen und Nivellieren der Profile (11) eingerichtet sind, so dass die Enden der Profile (11) auf der gleichen Höhe angeordnet sind, und
- zumindest einen Roboterarm (2), und
- zumindest ein Steuerungssystem (3), das zum Steuern des zumindest einen bewegbaren Rahmens (1) und der zumindest zwei Führungselemente (5) eingerichtet ist,
das System (10) **dadurch gekennzeichnet, dass**
sich die zumindest zwei Befestigungsformen (6) in dem Befestigungsbereich (1.2) des Rahmens (1) befinden,
der Roboterarm (2) ein Greifinstrument (7) aufweist, das zum Greifen, Transportieren und Einführen der Profile (11) in die Befestigungsformen (6) eingerichtet ist, und
das Steuerungssystem (3) auch zum Steuern des zumindest einen Roboterarms (2) und der zumindest zwei Befestigungsformen (6) eingerichtet ist.

2. System (10) zum Einspannen der Enden von Profilen (11) zur Befestigung dieser nach Anspruch 1, **dadurch gekennzeichnet, dass** die zumindest zwei Führungselemente (5) zwischen einer ersten Betriebsstellung und einer zweiten Ruheposition bewegbar sind, und
erste und zweite bewegbare Führungen (5.1, 5.2), die zur Aufnahme und zum Einspannen der Profile (11) eingerichtet sind, und
eine bewegbare Nivellierungseinrichtung (5.3), die zum Nivellieren der Enden der Profile (11) auf der gleichen Höhe eingerichtet sind,
aufweisen.

3. System (10) zum Einspannen der Enden von Profilen (11) zur Befestigung dieser nach Anspruch 2, **dadurch gekennzeichnet, dass** die ersten und zweiten bewegbaren Führungen (5.1, 5.2) zumindest zwei divergierende Platten (5.1.2, 5.2.2) aufweisen, die in einer V-Form divergieren, um die Aufnahme der Profile in den Führungselementen (5) zu erleichtern.

4. System (10) zum Einspannen der Enden von Profilen (11) zur Befestigung dieser nach Anspruch 1, **dadurch gekennzeichnet, dass** das Greifinstrument (7) zumindest eine erste bewegbare Klemme (7.1) aufweist, die sich innerhalb des Greifinstruments (7) befindet und zum Greifen und Freigeben der Enden der Profile (11) eingerichtet ist.

5. System (10) zum Einspannen der Enden von Profilen (11) zur Befestigung dieser nach Anspruch 4, **dadurch gekennzeichnet, dass** das Greifinstrument (7) eine erste bewegbare Klemme (7.1) und eine zweite bewegbare Klemme (7.2) aufweist.

6. System (10) zum Einspannen der Enden von Profilen (11) zur Befestigung dieser nach Anspruch 1, **dadurch gekennzeichnet, dass** die zumindest zwei Befestigungsformen (6) ein oberes Formstück (6.1), ein unteres Formstück (6.2) aufweisen, wobei beide Formstücke (6.1, 6.2) zumindest eine Öffnung (6.3) bilden, die zur Aufnahme der Enden der Profile (11) eingerichtet ist.

7. System (10) zum Einspannen der Enden von Profilen (11) zur Befestigung dieser nach Anspruch 6, **dadurch gekennzeichnet, dass** die Formstücke (6.1, 6.2) zwei Öffnungen (6.3, 6.4) bilden, die zur Aufnahme der Enden von Profilen (11) eingerichtet sind.

8. System (10) zum Einspannen der Enden von Profilen (11) zur Befestigung dieser nach Anspruch 7, **dadurch gekennzeichnet, dass** die Öffnungen (6.3, 6.4) der Befestigungsformen (6) hinsichtlich der Geometrie der Profile (11) eine passende Geometrie aufweisen.

9. System (10) zum Einspannen der Enden von Profilen (11) zur Befestigung dieser nach einem der vorstehenden Ansprüche, **dadurch gekennzeichnet, dass** es zumindest ein zweites Halteelement (9) aufweist, das sich in dem Haltebereich (1.1) des Rahmens (1) befindet.

10. System (10) zum Einspannen der Enden von Profilen (11) zur Befestigung dieser nach Anspruch 9, **dadurch gekennzeichnet, dass** es ein Platzierungselement (8) aufweist, das zur Festlegung und Sicherung des Profils (11) in dem zumindest zweiten Halteelement (9) eingerichtet ist.

11. System (10) zum Einspannen der Enden von Profilen (11) zur Befestigung dieser nach einem der vorstehenden Ansprüche, **dadurch gekennzeichnet, dass** es zumindest zwei Anschlagselemente (16) aufweist, die zur Begrenzung der Reichweite der Enden der Profile (11) eingerichtet sind, wenn diese Enden in die Befestigungsformen (6) eingeführt werden, wobei diese zwei Anschlagselemente (16) Reinigungseinrichtungen (17) aufweisen, die zur Reinigung des Inneren der Enden der Profile (11) eingerichtet sind.

12. Verfahren zum Einspannen der Enden der Profile (11) zu deren Befestigung, wobei das Verfahren die folgenden Schritte umfasst:
a) Bereitstellen eines Systems zum Einspannen nach einem der Ansprüche 1 bis 11,
b) Einspannen der Profile (11) an dem Halteelement (4) und dem Führungselement (5) des Rahmens (1),
c) Einstellen der Profile (11) mittels des Führungselements (5),
d) Nivellieren der Höhe der Profile (11) mittels des Führungselements (5),
e) Greifen der Enden der Profile (11) durch das Greifinstrument (7) des Roboterarms (2),
f) Transportieren der Enden der Profile (11) von dem Führungselement (5) zu der Befestigungsform (6) des Rahmens (1) mittels des Roboterarms (2),
g) Einbringen der Enden der Profile (11) in die Befestigungsform (6), und
h) Festlegen der Profile (11) mittels des Platzierungselements (8),
wobei das Steuerungssystem (3) zur Steuerung der Bewegung des zumindest einen bewegbaren Rahmens (1), zumindest zwei Führungselementen (5), zumindest einen Roboterarms (2), zumindest zwei Befestigungsformen (6) und des zumindest einen Platzierungselements (8) eingerichtet ist.

13. Verfahren zum Einspannen der Enden von Profilen (11) zur Befestigung dieser nach Anspruch 12, **dadurch gekennzeichnet, dass** Schritt (d) das Nivellieren der Höhe der Enden der Profile (11) vermittels einer Vertikalbewegung der bewegbaren Nivellierungseinrichtung (5.3) des Führungselements (5) umfasst.

14. Verfahren zum Einspannen der Enden von Profilen (11) zur Befestigung dieser nach Anspruch 12, **dadurch gekennzeichnet, dass** in Schritt (e) die ersten und zweiten bewegbaren Klemmen (7.1, 7.2) des Greifinstruments (7) eine sequentielle Greifbewegung durchführen.

15. Verfahren zum Einspannen der Enden von Profilen (11) zur Befestigung dieser nach Anspruch 12, **dadurch gekennzeichnet, dass** Schritt (h) das Bewegen des Platzierungselements (8) zum Festlegen des Profils (11) umfasst, um das zweite Halteelement (9) zu erreichen und in diesem gehalten zu werden.

## Revendications

1. Un système (10) pour charger des extrémités de profilés (11) en vue de la fixation de celles-ci, le système (10) comprenant :
- au moins un châssis mobile (1) comprenant
une première zone de maintien (1.1),
une zone de fixation (1.2)
au moins un premier élément de maintien (4), situé dans la zone de maintien (1.1) du châssis (1), et configuré pour maintenir les profilés (11), et
au moins deux moules de fixation (6) ;
- au moins deux éléments de guidage (5) configurés pour ajuster et mettre à niveau les profilés (11) de sorte que les extrémités des profilés (11) soient disposées à la même hauteur,
- au moins un bras de robot (2) et
- un système de commande (3) configuré pour commander ledit au moins un châssis mobile (1) et lesdits au moins deux éléments de guidage (5),
le système (10) étant **caractérisé en ce que**
lesdits au moins deux moules de fixation (6) sont situés dans la zone de fixation (1.2) du châssis (1),
le bras de robot (2) comprend un outil de préhension (7) configuré pour saisir, transporter et introduire les profilés (11) dans les moules de fixation (6), et
le système de commande (3) est également configuré pour commander ledit au moins un bras de robot (2) et lesdits au moins deux moules de fixation (6).

2. Le système (10) pour charger des extrémités de profilés (11) en vue de la fixation de celles-ci, selon la revendication 1, **caractérisé en ce que** lesdits au moins deux éléments de guidage (5) sont mobiles entre une première position de fonctionnement et une deuxième position de non fonctionnement et comprennent
des premier et deuxième guides mobiles (5.1, 5.2) configurés pour loger et piéger les profilés (11), et
un dispositif mobile de mise à niveau (5.3) configuré pour mettre à niveau les extrémités des profilés (11), à la même hauteur.

3. Le système (10) pour charger des extrémités de profilés (11) en vue de la fixation de celles-ci, selon la revendication 2, **caractérisé en ce que** les premier et deuxième guides mobiles (5.1, 5.2) comprennent au moins deux plaques divergentes (5.1.2, 5.2.2) divergeant selon une forme en V pour rendre plus facile la réception des profils dans les éléments de guidage (5).

4. Le système (10) pour charger des extrémités de profilés (11) en vue de la fixation de celles-ci, selon la revendication 1, **caractérisé en ce que** l'outil de préhension (7) comporte au moins une première pince mobile (7.1) située à l'intérieur de l'outil de préhension (7), et configuré pour saisir et libérer les extrémités des profilés (11).

5. Le système (10) pour charger des extrémités de profilés (11) en vue de la fixation de celles-ci, selon la revendication 4, **caractérisé en ce que** l'outil de préhension (7) comprend une première pince mobile (7.1) et une deuxième pince mobile (7.2).

6. Le système (10) pour charger des extrémités de profilés (11) en vue de la fixation de celles-ci, selon la revendication 1, **caractérisé en ce que** lesdits au moins deux moules de fixation (6) comprennent une pièce de moule supérieure (6.1), une pièce de moule inférieure (6.2), les deux pièces de moule (6.1, 6.2) formant au moins une ouverture (6.3) configurée pour loger les extrémités des profilés (11).

7. Le système (10) pour charger des extrémités de profilés (11) en vue de la fixation de celles-ci, selon la revendication 6, **caractérisé en ce que** les pièces de moule (6.1, 6.2) forment deux ouvertures (6.3, 6.4) configurées pour loger les extrémités des profilés (11).

8. Le système (10) pour charger des extrémités de profilés (11) pour la fixation de ceux-ci selon la revendication 7, **caractérisé en ce que** les ouvertures (6.3, 6.4) des moules de fixation (6) présentent une géométrie complémentaire par rapport à la géométrie des profils (11).

9. Le système (10) pour charger des extrémités de profilés (11) en vue de la fixation de celles-ci, selon l'une quelconque des revendications précédentes, **caractérisé en ce qu'**il comporte au moins un deuxième élément de maintien (9) situé dans la zone de maintien (1.1) du châssis (1).

10. Le système (10) pour charger des extrémités de profilés (11) en vue de la fixation de celles-ci, selon la revendication 9, **caractérisé en ce qu'**il comprend un élément de placement (8) configuré pour serrer et lier le profil (11) dans ledit au moins un deuxième élément de maintien (9).

11. Le système (10) pour charger des extrémités de profilés (11) en vue de la fixation de celles-ci, selon l'une quelconque des revendications précédentes, **caractérisé en ce qu'**il comprend au moins deux éléments d'arrêt (16) configurés pour limiter la portée des extrémités des profilés (11) lorsque ces extrémités sont introduites dans les moules de fixation (6), lesdits au moins deux éléments d'arrêt (16) comprenant des moyens de nettoyage (17) configurés pour nettoyer l'intérieur des extrémités des profilés (11).

12. Un procédé pour charger des extrémités de profilés (11) en vue de la fixation de celles-ci, le procédé comprenant les étapes suivantes :
a) prévoir un système de chargement selon l'une quelconque des revendications 1 à 11,
b) charger les profilés (11) sur l'élément de maintien (4) et l'élément de guidage (5) du châssis (1),
c) ajuster les profils (11) au moyen de l'élément de guidage (5),
d) mettre à niveau la hauteur des profils (11) au moyen de l'élément de guidage (5),
e) saisir les extrémités des profilés (11) au moyen de l'outil de préhension (7) du bras de robot (2),
f) transporter les extrémités des profilés (11) depuis l'élément de guidage (5) vers le moule de fixation (6) du châssis (1) au moyen du bras de robot (2),
g) introduire les extrémités des profilés (11) dans le moule de fixation (6), et
h) serrer les profilés (11) au moyen de l'élément de placement (8),
le système de commande (3) étant configuré pour commander le mouvement dudit au moins un châssis mobile (1), desdits au moins deux éléments de guidage (5), dudit au moins un bras de robot (2), desdits au moins deux moules de fixation (6) et dudit au moins un élément de placement (8).

13. Le procédé pour charger des extrémités de profilés (11) en vue de la fixation de celles-ci, selon la revendication 12, **caractérisé en ce que** l'étape (d) comprend la mise à niveau de la hauteur des extrémités des profilés (11) au moyen d'un mouvement vertical du dispositif mobile de mise à niveau (5.3) de l'élément de guidage (5).

14. Le procédé pour charger des extrémités de profilés (11) en vue de la fixation de celles-ci, selon la revendication 12, **caractérisé en ce que**, dans l'étape (e), les première et deuxième pinces mobiles (7.1, 7.2) de l'outil de préhension (7) effectuent un mouvement de préhension séquentiel.

15. Le procédé pour charger des extrémités de profilés (11) en vue de la fixation de celles-ci, selon la revendication 12, **caractérisé en ce que** l'étape (h) comprend le fait de déplacer l'élément de placement (8) pour serrer le profilé (11) de façon qu'il atteigne et soit retenu dans le deuxième élément de maintien (9).
